# EUROPEAN PATENT APPLICATION

(11) **EP 2 133 730 A1**
(43) Date of publication of application: **16.12.2009**
(21) Application number: 09162235.7
(22) Date of filing: 09.06.2009
(51) Int. Cl.: G02C 5/22, G02C 11/02

(54) **Hinge for spectacles, decorative element for a hinge for spectacles and articulation element for a hinge for spectacles**

(30) Priority: 10.06.2008 IT UD20080018 U
(71) Applicant: Visottica industrie SPA Con Unico Socio, 31058 Susegana (TV) (IT)
(72) Inventor: Montalban, Rinaldo, 30100 Venezia (IT)
(74) Representative: Petraz, Gilberto Luigi

(57) **Abstract**

Hinge (10) for spectacles comprising two articulation elements (13, 15) pivoted to each other and mounted on relative components (11, 12) of a frame for spectacles. The hinge (10) comprises a decorative element (17) provided with a decorative portion (17c), associated with one of the two articulation elements (13, 15) and conformed so as to define an attachment seating (17a) having standardized shape and sizes. The attachment seating (17a) houses inside it a coordinated part of a body (16) of the articulation element (13, 15), so as to define the structural attachment of the decorative element (17) to the articulation element (13, 15) and to keep the decorative portion (17c) facing toward the outside. The decorative element (17) also comprises a functional aperture (17b) made in correspondence with a functional component (18, 19) of the articulation element (13, 15) and conformed so as to allow the operational movements of the functional component (18, 19).

## Description

### FIELD OF THE INVENTION

The present invention concerns a hinge for spectacles, an articulation element, and a decorative element for the hinge, whether the latter is the elastic type or the simple type, able to connect a temple to a lug, or a front piece, of a frame for spectacles.

### BACKGROUND OF THE INVENTION

Hinges are known, of the elastic type and also of the simple type, which articulate to each other a temple and a lug or front-piece of a frame, allowing to maintain an adequate pressure on the user's temples in order to improve wearability.

Traditional hinges generally consist of two articulation elements pivoted to each other and mounted, respectively, the first on the temple and the second on the lug or front-piece of the frame for spectacles.

Each articulation element is preferably made of metal material, or plastic.

In particular, hinges for spectacles are known in which each articulation element comprises anchoring means on its lower surface, for example an anchor, and also hinges for spectacles in which each articulation element is welded, or at least partly drowned in the relative temple or on the relative lug or front-piece of the frame.

In the production of spectacles and their components, there is an ever-growing need to confer on the hinges, and more generally on the frame, particular aesthetic forms, and to affix upon them ornaments, trademarks, logos, or other signs that identify the producer or a particular product line.

Furthermore, to identify the originality of the product with greater certainty, it is becoming more and more frequent to make or affix ornaments, trademarks logos or other distinctive signs directly on the parts of the frame, such as for example the hinges.

In this way, given the extremely small sizes of the components, the possible reproduction of said distinctive signs is difficult to obtain for a counterfeiter.

Hinges for spectacles are known in which the various components have external surfaces, or shapings, structured so as to identify the distinctive signs.

These conformations are normally achieved by mechanical removal of material, coining or directly by molding.

However, known solutions are extremely expensive both in the case of mechanical working, especially due to the working times and the waste of material, and also in the case of direct molding, since in order to obtain a satisfactory quality expensive molding techniques must be used, for example of the type known as PIM or MIM.

Moreover, for every type and size of shaping, the known solutions need a specific production of tools, and also a specific programming of the machine tools or molding equipment.

Hinges are also known for spectacles which include portions on which the distinctive signs are made by laser incision.

However, this known solution also entails very high costs and specific programming of the equipment.

Furthermore, with hinges made using traditional technologies, when it is the articulation elements themselves that define with their shape the desired distinctive sign, there must be provided, on each occasion, specific design and working steps, with high production costs and goods on hand.

Purpose of the present invention is to achieve a hinge for spectacles on which ornaments, trademarks, logos or other distinctive signs are made, which is easy and economical to make, which guarantees an optimum final aesthetic result, and which does not entail high production costs and goods on hand.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

A hinge for spectacles according to the present invention comprises at least two articulation elements pivoted to each other and mounted respectively on a temple and on a lug or front-piece of a frame for spectacles.

In accordance with the above purpose, the hinge comprises at least a decorative element, independent, associated with at least one of the articulation elements.

The decorative element is conformed so as to define at least an attachment seating conformed in a standardized manner, and able to house inside it at least a coordinated part of the body of the articulation element, so as to define the structural attachment of the decorative element to the articulation element.

The decorative element also comprises at least a functional aperture made in correspondence with a functional component of the articulation element and conformed so as to allow the operating movements of the functional component, without interfering with the normal use of the hinge.

In general, by functional element, we mean an eyelet, an elastic slider, an anchor, an attachment surface, or any other part or component, which achieves or participates in the pivoting and/or correct functioning of the hinge.

Therefore the hinge for spectacles according to the present invention comprises at least a decorative element distinct and independent from the relative articulation element, and is able to be attached on each occasion to the latter so as to define the relative decoration of the spectacles.

The standardized conformation of the attachment seating consequently allows to achieve articulation elements for the hinge having correspondingly standardized shapes and sizes.

Therefore, the operations to make the articulation elements are considerably simplified, giving advantages in the times and costs of making the hinge and also reducing the goods on hand.

In this way, no specific programming of the machine tools is required for making the articulation elements, or molding equipment to make the distinctive signs.

Indeed, with the present invention, it is possible to provide a standardized production of articulation elements, with the possibility of associating freely one type or another of decorative element on each occasion, according to the different aesthetic requirements of the producer of spectacles.

Advantageously, the decorative element is conformed externally to define one or more signs identifying the product or the producer.

According to some variants, the decorative element has, at least partly, an external conformation identifying the product and/or the producer, peripherally defining trademarks, designs, logos or alphanumerical signs and/or provides the conformation of seatings where the distinctive signs are applied.

The present invention also has the advantage that it simplifies the production of the decorative element inasmuch as, since it is independent from the articulation element, it does not require joints, channels, ducts or pivoting operating parts, nor the direct operating housing inside it of pins, elastic sliders, or other.

This advantage enables to make the decorative element substantially with a single working pass, or in any case without resumption of operations after the attachment seating and the functional aperture have been made.

Furthermore, given the simplicity and standardization of production, both the attachment seating and the functional aperture can be made simply, without using expensive and particular mechanical technologies.

Moreover, since the decorative element is distinct from the relative articulation element, it can be made in a different material from the articulation element. In this way, it is possible to have decorative elements made of any color or material, for example metal, plastic, wood, rhinestone, ceramic materials, minerals such as precious stones or other.

According to a variant, the standardized attachment seating is made on the decorative element in such a manner that, in the assembled condition of the frame, the decorative element is positioned at least partly visible with respect to the relative temple or the relative lug or front-piece.

According to a variant, the attachment seating defines first attachment means, such as holes, hollows, grooves or other, with which coordinated second attachment means cooperate, such as screws, pins, ribs or other, made on or associated with the body of the articulation element, so as to define a structural connection between the decorative element and the relative articulation element.

According to another variant, the attachment seating and the body of the articulation element comprise respective surfaces conformed so as to be reciprocally joined with interference or snap-in connection.

According to another variant, the attachment seating and the body of the articulation element have respective surfaces able to be reciprocally glued.

According to another variant, the attachment seating and the body of the articulation element are reciprocally conformed to be welded or spot-welded together by means of electro welding.

According to another variant, the articulation element comprises at least a body made of metal material, whereas the decorative element is made of plastic material, to allow a wider range of possible conformations of the decorative element.

According to another variant, both the articulation element and the decorative element are made of metal material.

According to another variant, the decorative element is made of aluminum or an alloy thereof, on which an anodizing treatment is then performed in order to form an external protective layer with different characterizing colors.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is a three-dimensional view of a first form of embodiment of a hinge for spectacles according to the present invention;
- fig. 2 is a sectioned lateral view of the hinge in fig. 1;
- fig. 3 is an exploded three-dimensional view of a first articulation element of the hinge in fig. 1;
- fig. 4 is a three-dimensional view of the articulation element in fig. 3, in the assembled condition;
- fig. 5 is an exploded three-dimensional view of a first variant of the articulation element in fig. 3;
- fig. 6 is an exploded three-dimensional view of a second variant of the articulation element in fig. 3;
- fig. 7 is a sectioned lateral view of a third variant of the articulation element in fig. 3;
- fig. 8 is an exploded three-dimensional view of a fourth variant of the articulation element in fig. 3;
- fig. 9 is an exploded three-dimensional view of a second articulation element of the hinge in fig. 1;
- fig. 10 is a three-dimensional view of the articulation element in fig. 9, in the assembled condition;
- fig. 11 is an exploded three-dimensional view of a variant of the articulation element in fig. 9;
- figs. 12, 13 and 14 show in sequence an assembly of a fifth variant of the articulation element in fig. 3.

### DETAILED DESCRIPTION OF SOME PREFERENTIAL FORMS OF EMBODIMENT

With reference to the attached drawings, a hinge for spectacles 10 according to the present invention is applied to articulate reciprocally a temple 11 to a lug 12 or to a front-piece of a frame for spectacles.

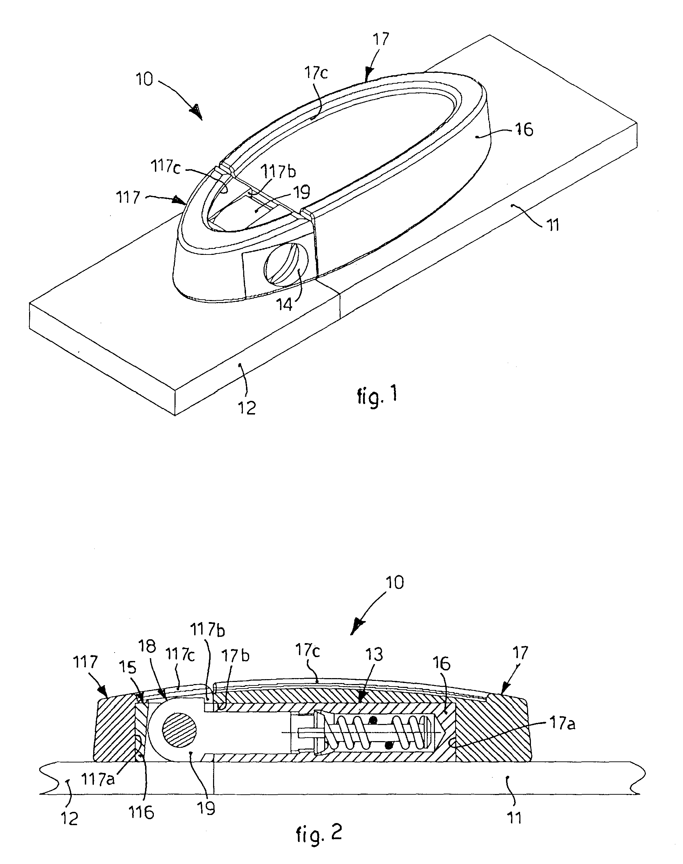

In particular, in the form of embodiment shown in figs. 1, 2, 3 and 4, as a non-restrictive example, the hinge 10 according to the present invention is the elastic type and is able to allow, apart from the reciprocal rotation of the temple 11 and the lug 12 or front-piece, also an elastic extra-travel on opening, to improve the wearing conditions of the frame.

However, it cannot be excluded that the present invention can also be applied equally effectively to traditional type hinges, that is, non-elastic, for spectacle frames.

The hinge 10 comprises in a traditional manner two articulation elements, respectively a first 13, associated with the temple 11, and a second 15, associated with the lug 12 or the front-piece.

Each articulation element 13, 15 comprises relative hinging eyelets 19 reciprocally pivoted to each other by means of a pin 14, for example a screw.

In this case, the first articulation element 13 is the elastic type and comprises a box-like body 16 in which an elastic slider 18 is slidingly housed, the latter defining the hinging eyelet 19.

The box-like body 16 is normally made of metal material, has a simplified shape, substantially a regular parallelepiped, and has standardized sizes.

According to a variant, not shown, the box-like body 16 has beveled edges, rounded, or shaped, or tapered, to facilitate coupling with the decorative element 17.

The first articulation element 13 also comprises a decorative element 17 preferably made of metal material, but also plastic or other, and provided with an attachment seating 17a, a functional aperture 17b and a decorative portion 17c.

The attachment seating 17a is open toward a lower side of the decorative element 17 and has standardized shape and sizes coordinated with those of the box-like body 16, so as to house the latter inside it, in a correlated manner.

According to a variant, the attachment seating 17a and the body 16 of the articulation element 13 are reciprocally conformed to be glued.

According to another variant, the attachment seating 17a and the body 16 of the articulation element 13 are reciprocally conformed to be welded or spot-welded by means of electro-welding.

The functional aperture 17b is made open toward a front side of the decorative element 17 and communicates with the attachment seating 17a.

In this case, the functional aperture 17b is also open toward a lower side of the decorative element 17, so as to allow the box-like body 16 to be inserted from below into the attachment seating 17a.

Furthermore, the functional aperture 17b is made in a position such that, in an assembled condition of the box-like body 16 in the attachment seating 17a, it allows the free sliding of the elastic slider 18 with its hinging eyelet 19.

In this way, the decorative element 17 is attached to the first articulation element 13, without interfering with the members that actuate its elastic pivoting with the second articulation element 15.

The decorative portion 17c is disposed visible and, in this case, is made on the opposite side of the decorative element 17 with respect to the attachment seating 17a.

In particular, the decorative portion 17c is conformed to identify one or more distinctive signs of the product and/or the producer.

The distinctive signs identifiable on the decorative portion 17c can be, for example, logos, trademarks, writings, drawings or other, made by etching, silk-screen printing, printed or made in relief on the external surface, or defined by the external shape of the decorative element 17 itself.

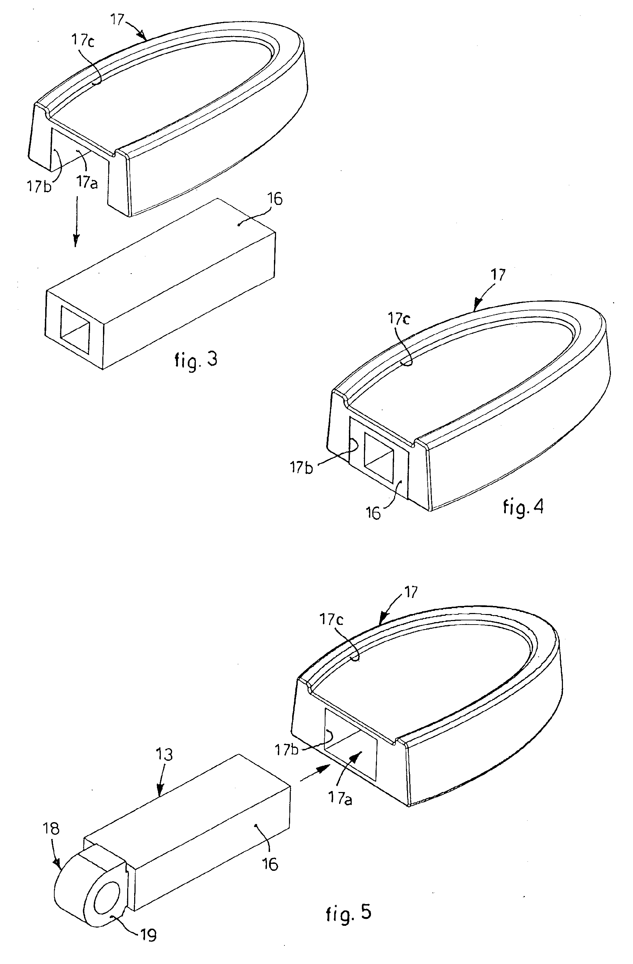

In the variant shown in fig. 5, the attachment seating 17a has standardized shape and sizes, is conformed blind inside the decorative element 17, and communicates with the outside only through the functional aperture 17b. The latter, in this case, is open only toward the front side of the decorative element 17.

In this variant, the box-like body 16 with the relative elastic slider 18 is inserted into the attachment seating 17a from the front side through the functional aperture 17b.

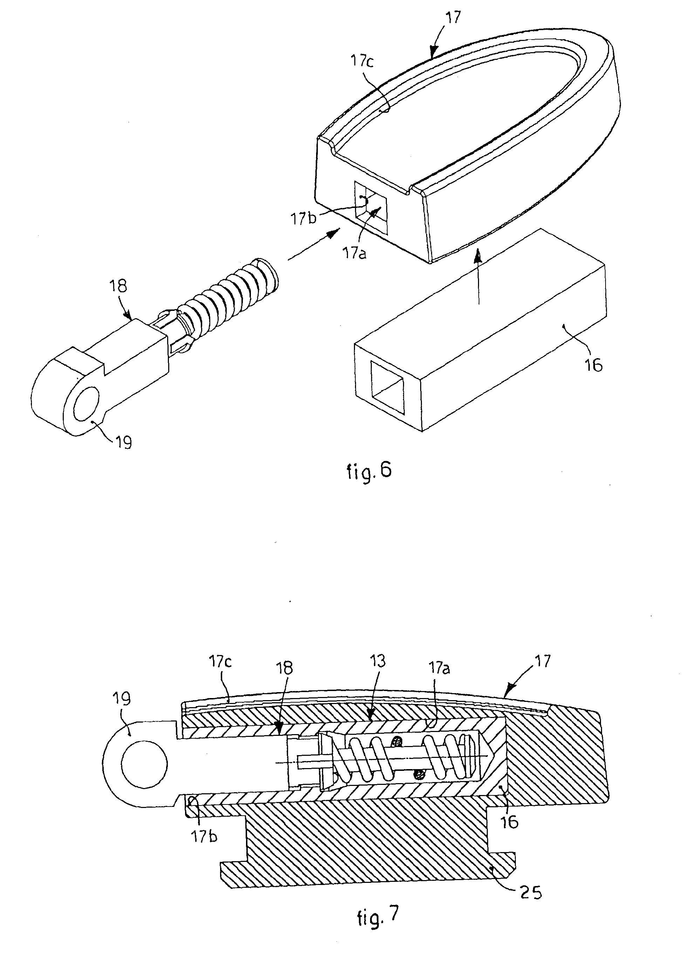

In the form of embodiment shown in fig. 6, the attachment seating 17a has standardized shape and sizes, it is open toward the lower side of the decorative element 17, whereas the functional aperture 17b is open only toward the front side of the decorative element 17.

In this variant, the box-like body 16 is inserted into the attachment seating 17a from the lower side of the decorative element 17, whereas the elastic slider 18 is coupled subsequently with the box-like body 16, by means of insertion from the front side through the functional aperture 17b.

In the variant shown in fig. 7, the attachment seating 17a has standardized shape and sizes, is conformed blind inside the decorative element 17, and communicates with the outside only through the functional aperture 17b. The latter, in this case, is open only toward the front side of the decorative element 17.

In this variant, the decorative element 17 comprises on its lower part at least an anchor 25 to anchor to the relative temple 11 or lug 12.

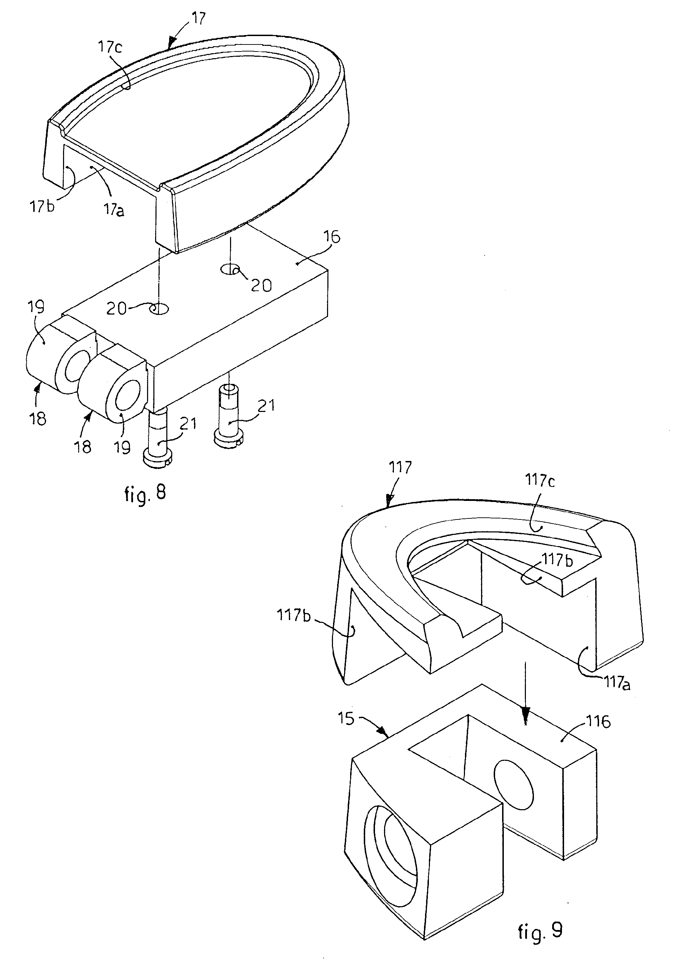

In the form of embodiment shown in fig. 8, the elastic hinge 10 is of the type with a double slider, that is, on the same box-like body 16 two elastic sliders 18 are slidingly associated, with relative hinging eyelets 19.

In this case too, the attachment seating 17a has standardized shape and sizes, correlated to the size and shape of the box-like body 16.

Furthermore, the attachment seating 17a is open toward the lower side of the decorative element 17, whereas the functional aperture 17b is open both toward the front side and also toward the lower side of the decorative element 17.

In this variant the box-like body 16 comprises two through holes 20, whereas inside the attachment seating 17a two corresponding blind threaded holes are made, not shown here.

As shown in fig. 8, this solution provides to use two attachment screws 21, threaded in from below through the two through holes 20 and screwed into the relative threaded holes of the attachment seating 17a, so as to consolidate the coupling of the box-like body and the decorative element 17.

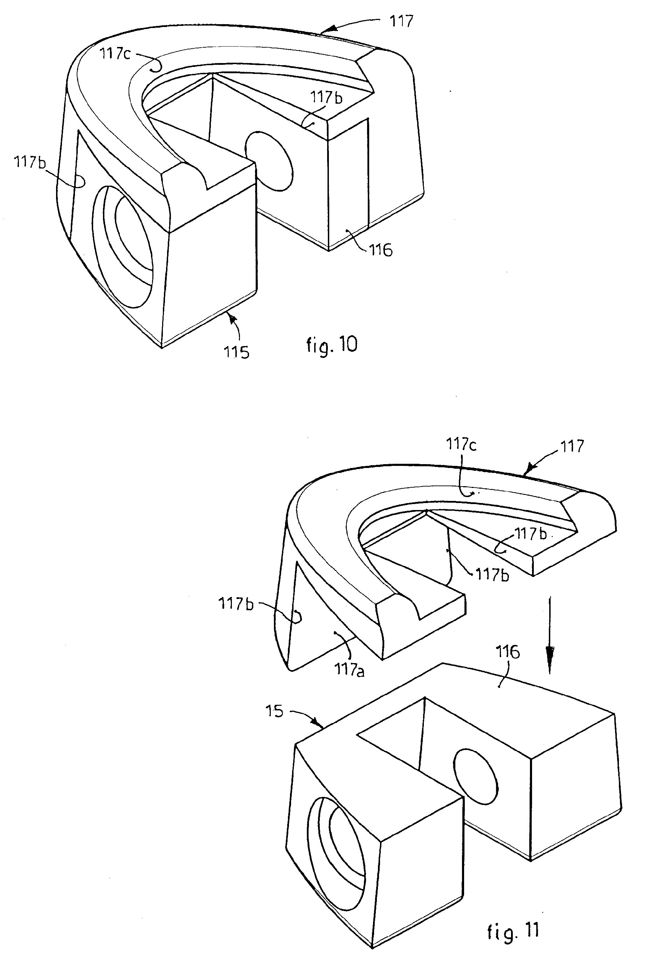

Figs. 9 and 10 show, in particular, the second articulation element 15 of the elastic hinge 10 in fig. 1, with which a decorative element 117 is associated, provided with a decorative portion 117c.

In this case too, the decorative element, indicated by the reference number 117, comprises the attachment seating 117c of standardized shape and sizes in which the coordinated body 116 of the articulation element 15 is housed.

The decorative element 117 in this case also comprises two functional apertures 117b, respectively a first open both toward the upper side and also toward the front side, to allow the functional housing of the hinging eyelet 19 of the first articulation element 13, and a second open laterally to allow the insertion of the pin 14, in the assembly steps of the hinge 10.

According to a variant the attachment seating 117a and the body 116 of the articulation element 15 are reciprocally conformed to be glued or welded.

In the variant shown in fig. 11, unlike in the previous form of embodiment, the decorative element 117 for the second articulation element 15 comprises three functional apertures 117b, that is, one for the hinging eyelet 19 of the first articulation element 13, and two on opposite sides for the pin 14.

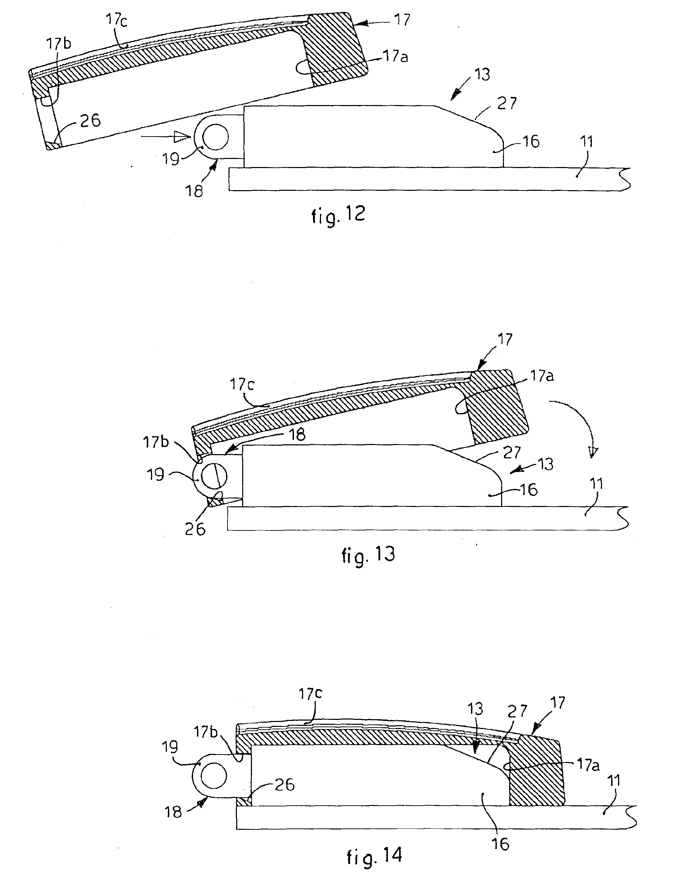

In the form of embodiment shown in figs. 12, 13 and 14, the decorative element 17 is conformed so that the box-like body 16 is totally hidden from sight.

In this alternative solution, the functional aperture 17b is sized to allow only the passage and sliding of the elastic slider 18, but it is not possible to see the box-like body 16, which is completely covered by the decorative element 17.

According to another variant, shown in figs. 12, 13 and 14 but able to be made independently of the complete covering of the box-like body 16, the functional aperture 17b has an assembly bevel or lead-in 26, which allows to insert the hinging eyelet into the functional aperture 17b, keeping the decorative element 17 inclined so as to overlap the box-like body 16.

Once the hinging eyelet 19 is completely inserted into the functional aperture 17b, the decorative element 17 can be rotated toward the box-like body 16 to couple the latter in snap-in manner in the attachment seating 17a.

Advantageously, the box-like body 16 has at the rear a beveled edge 27 to promote and facilitate the snap-in coupling in the attachment seating 17a.

In this way, it is not necessary to join the box-like body 16 and the decorative element 17 by welding or with screws, also exploiting the elastic action due to the hinging with the relative second articulation element 15 to clamp the decorative element 17 on the box-like body 16.

According to another variant, not shown here, in which a first articulation element 13 with a double slider 18 is provided, the decorative element 117 will be provided with at least two functional apertures 117b, for the functional positioning of the respective two hinging eyelets 19.

It is clear, however, that modifications and/or additions of parts may be made to the hinge 10 as described heretofore, without departing from the field and scope of the present invention.

For example, it comes within the field of the present invention to provide that the attachment seating 117a is blind and the relative second articulation element 15 is inserted into it through one of its functional apertures 117b.

According to another variant, not shown here, the decorative element 117 for the second articulation element 15 also has at the lower part, integrated therewith, at least an anchor 25 to anchor to the relative temple 11 or lug 12 of the frame.

According to another variant, the attachment seating 17a or 117a and the body 16, 116 of the relative articulation element 13 or 15 comprise respective surfaces conformed so as to be reciprocally joined by interference or snap-in attachment.

According to another variant, the decorative portion 17c or 117c provides on the surface at least a housing seating for a trademark, a logo or other distinctive sign of the product and/or producer.

According to a variant, the decorative element 17, 117 is made of aluminum or an alloy thereof, and subjected to anodizing.

According to another variant, the decorative element 17, 117 is obtained by means of a coining/forging method.

According to another variant, the decorative element 17, 117 is obtained by injection molding of metal powders, for example with known techniques such as MIM, PIM or others.

It also comes within the field of the present invention, for example, to provide that, as in the solution shown in fig. 8, the consolidation of the decorative element 117 and the relative second articulation element 15 provides to use one or more attachment screws 21.

It is also clear that, although the present invention has been described with reference to some specific examples, a person of skill in the art shall certainly be able to achieve many other equivalent forms of hinge for spectacles, a decorative element for a hinge for spectacles and an articulation element for a hinge for spectacles, having the characteristics as set forth in the claims and hence all coming within the field of protection defined thereby.

## Claims

1. Hinge for spectacles comprising at least two articulation elements (13, 15) pivoted to each other and mounted on relative components (11, 12) of a frame for said spectacles, **characterized in that** it comprises at least a decorative element (17, 117) provided with a decorative portion (17c, 117c), associated with at least one of said two articulation elements (13, 15) and conformed so as to define at least an attachment seating (17a, 117a) having standardized shape and sizes, and able to house inside it at least a coordinated part of a body (16, 116) of said articulation element (13, 15), so as to define the structural attachment of the decorative element (17, 117) to the articulation element (13, 15) and keep said decorative portion (17c, 117c) facing at least partly toward the outside, and at least a functional aperture (17b, 117b) made in correspondence with a functional component (18, 19) of the articulation element (13, 15) and conformed so as to allow the operational movements of said functional component (18, 19).

2. Hinge as in claim 1, **characterized in that** said attachment seating (17a, 117a) is open toward a lower side of said decorative element (17, 117).

3. Hinge as in claim 1, **characterized in that** said attachment seating (17a, 117a) is made blind inside said decorative element (17, 117).

4. Hinge as in any claim hereinbefore, **characterized in that** said functional aperture (17b, 117b) is open toward a front side of said decorative element (17, 117).

5. Hinge as in any claim hereinbefore, **characterized in that** said functional aperture (17b, 117b) is open toward a lower side of said decorative element (17, 117).

6. Hinge as in any claim hereinbefore, **characterized in that** said functional aperture (17b, 117b) is open laterally to said decorative element (17, 117).

7. Hinge as in any claim hereinbefore, **characterized in that** said functional aperture (17b, 117b) is open toward an upper side of said decorative element (17, 117).

8. Hinge as in any claim hereinbefore, **characterized in that** said body (16, 116) of said articulation element (13, 15) is made at least partly of metal material, whereas said decorative element (17, 117) is made of plastic material.

9. Hinge as in any claim from 1 to 8, **characterized in that** said body (16, 116) of said articulation element (13, 15) and said decorative element (17, 117) are made of metal material.

10. Hinge as in claim 9, **characterized in that** said decorative element (17, 117) is made of aluminum or an alloy thereof.

11. Hinge as in claim 9 or 10, **characterized in that** said decorative element (17, 117) is obtained by coining/forging steps.

12. Hinge as in claim 9 or 10, **characterized in that** said decorative element (17, 117) is obtained by a process of injection molding of metal powders.

13. Hinge as in any claim hereinbefore, **characterized in that** said functional aperture (17b) is sized to allow only the passage and sliding of the functional component (18, 19), but not to see the body (16), which is completely covered by said decorative element (17).

14. Hinge as in any claim hereinbefore, **characterized in that** at least said functional aperture (17b) has at least an assembly bevel (26), able to allow the assembly by snap-in coupling of said decorative element (17) on said box-like body (16).

15. Hinge as in any claim hereinbefore, **characterized in that** said attachment seating (17a, 117a) and said body (16, 116) comprise respective surfaces able to be reciprocally glued.

16. Hinge as in any claim from 1 to 14, **characterized in that** said attachment seating (17a, 117a) and said body (16, 116) comprise respective surfaces able to be reciprocally welded or spot-welded by electro-welding.

17. Hinge as in any claim from 1 to 14, **characterized in that** said attachment seating (17a, 117a) defines first attachment means with which coordinated second attachment means (21) cooperate, associated with said body (16, 116) of said articulation element (13, 15), so as to define a structural connection between said decorative element (17, 117) and the relative articulation element (13, 15).

18. Hinge as in any claim from 1 to 14, **characterized in that** said attachment seating (17a, 117a) and said body (16, 116) comprise respective surfaces conformed so as to be reciprocally joined by interference or snap-in attachment.

19. Hinge as in any claim hereinbefore, **characterized in that** said decorative portion (17c, 117c) is conformed to define one or more identifying signs of the product and/or producer.

20. Hinge as in any claim hereinbefore, **characterized in that** said decorative element (17, 117) at least partly comprises a structural shaping identifying the product and/or the producer.

21. Decorative element for a hinge for spectacles provided with a decorative portion (17c, 117c) and able to be mounted on a relative articulation element (13, 15) of the hinge for spectacles, **characterized in that** it comprises at least an attachment seating (17a, 117a) having standardized shape and sizes, able to cooperate with a body (16, 116) of said articulation element (13, 15) and conformed so as to define the structural attachment of the decorative element (17, 117) to the articulation element (13, 15), keeping said decorative portion (17c, 117c) facing at least partly toward the outside, and at least a functional aperture (17b, 117b) made in correspondence with at least a functional component (18, 19) of said articulation element (13, 15) and conformed so as to allow the operational movements of said functional component (18, 19) without interfering with the normal use of the hinge.

22. Articulation element for a hinge for spectacles able to be mounted on a relative component (11, 12) of a frame of said spectacles and associated with a relative decorative element (17, 117) provided with a decorative portion (17c, 117c), **characterized in that** it comprises at least a body (16, 116) having standardized shape and sizes and able to be inserted into a correlated attachment seating (17a, 117a) of said decorative element (17, 117), so as to define the structural attachment and to keep said decorative portion (17c, 117c) facing at least partly toward the outside, and at least a functional component (18, 19) able to be positioned in correspondence with at least a functional aperture (17b, 117b) of said decorative element (17, 117), so as to be able to perform its operating movements freely.
